# EUROPÄISCHE PATENTSCHRIFT

(11) **EP 0 974 392 B1**
(45) Veröffentlichungstag und Bekanntmachung des Hinweises auf die Patenterteilung: **17.09.2003**
(21) Anmeldenummer: 99111546.0
(22) Anmeldetag: 15.06.1999
(51) Int. Cl.: B01J 8/02, B01J 19/24, B23K 1/00

(54) **Verfahren zur Herstellung eines Stapelreaktors und Stapelreaktor zur Wasserstofferzeugung aus Kohlenwasserstoffen**
Process to construct a stack plate reactor and its use to produce hydrogen from hydrocarbons
Méthode de construction d'un réacteur par empilement de plaques et son utilisation pour produire de l'hydrogène à partir d'hydrocarbures

(30) Priorität: 21.07.1998 DE 19832625
(43) Veröffentlichungstag der Anmeldung: 26.01.2000
(73) Patentinhaber: Ballard Power Systems AG, 73230 Kirchheim / Teck-Nabern (DE)
(72) Erfinder: Heil, Dietmar, 88477 Hörenhausen (DE); Lamla, Oskar, 73266 Bissingen (DE); Schüssler, Martin, 89073 Ulm (DE)
(74) Vertreter: Beyer, Andreas, Dr.

(56) Entgegenhaltungen:
- EP-A- 0 870 541
- DE-A- 19 652 823
- DE-A- 19 743 673

## Beschreibung

Die Erfindung betrifft ein Verfahren zur Herstellung eines Stapelreaktors zur Wasserstofferzeugung aus Kohlenwasserstoffen sowie einen Stapelreaktor zur Wasserstofferzeugung aus Kohlenwasserstoffen.

Aus der deutschen Patentanmeldung mit dem Aktenzeichen 197 43 673.0 derselben Anmelderin ist ein derartiger, aus aufeinandergestapelten Katalysatorscheiben gebildeter Stapelreaktor bekannt. Zur Herstellung des Stapelreaktors wird aus mindestens einem Katalysatorpulver durch Verpressen eine einen Formkörper (Katalysatorscheibe) bildende dünne und stark komprimierte Schicht gebildet, wobei dem Katalysatorpulver Kupferpulver, insbesondere dendritisches Kupfer, beigemischt wird. Im Anschluß an das Verpressen wird der Formkörper einer Sinterung unterzogen und anschließend werden die einzelnen Katalysatorscheiben aufeinandergestapelt und zu einem Stapelreaktor verbunden. Bei dem Verbinden der einzelnen Katalysatorscheiben muß auf eine dichte Ausbildung der Fügestellen zwischen den einzelnen Katalysatorscheiben geachtet werden. Als Fügeverfahren bei hochdichten Keramiken sind Kleben, Schweißen, Löten und Klemmen bekannt. Im vorliegenden Falle einer porösen Katalysatorscheibe können diese bekannten Fügeverfahren nur zum Teil angewendet werden.

Aus der DE-OS 25 07 937 ist ein Röhrenspaltofen mit scheibenförmigen Katalysatormaterial bekannt. Die Katalysatorscheiben sind auf einen Tragrohr zentriert geführt und weisen in der Mitte eine Nabe von größerer Dicke auf.

Ausgehend hiervon liegt der Erfindung die Aufgabe zugrunde, ein Verfahren zur Herstellung eines Stapelreaktors der eingangs genannten Art bereitzustellen, das eine besonders einfache und kostengünstige Herstellung eines kompakt aufgebauten Stapelreaktors ermöglicht, bei dem das aktive Volumen der Katalysatorscheiben nicht oder nur wenig verringert wird und eine besonders dichte Ausgestaltung der Fügestellen erreicht wird. Des weiteren liegt der Erfindung die Aufgabe zugrunde, einen entsprechenden Stapelreaktor bereitzustellen.

Zur Lösung dieser Aufgabe werden erfindungsgemäß ein Verfahren zur Herstellung eines Stapelreaktors mit den Merkmalen des Anspruches 1 sowie ein Stapelreaktor zur Wasserstofferzeugung aus Kohlenwasserstoffen mit den Merkmalen des Anspruches 6 vorgeschlagen. Demnach erfolgt ein Sintern der Katalysatorscheiben im Grünlingszustand, d.h. im Anschluß an das Verpressen, gemeinsam erst in gestapeltem Zustand. Durch das gemeinsame Sintern wird eine dichte Verbindung der einzelnen Katalysatorscheiben erreicht. Da das Sintern aller Katalysatorscheiben gemeinsam erfolgt und nicht mehr einzeln, wie es aus dem Stand der Technik bekannt ist, können Arbeitsgänge eingespart werden, so daß das erfindungsgemäße Verfahren einfacher und kostengünstiger durchführbar ist.

In Ausgestaltung der Erfindung erfolgt das Sintern der Katalysatorscheiben unter vorbestimmter Druckbeaufschlagung. Durch dieses erfindungsgemäße Preßsintern wird eine besonders gute Verbindung der Katalysatorscheiben erzielt. Vorteilhafterweise wird die Druckbeaufschlagung während des gesamten Sintervorgangs aufrechterhalten.

Die vorbestimmte Druckbeaufschlagung der Katalysatorscheiben während des Sinterns beträgt vorteilhafterweise zwischen 2 und 20 N/mm², bevorzugterweise zwischen 5 und 15 N/mm².

Eine Katalysatorscheibe zum Aufbau eines erfindungsgemäßen Stapelreaktors weist im Bereich des Kontaktes mit einer benachbarten Katalysatorscheibe Vorsprünge zur Ausbildung von Fügestellen auf. Beim Aufeinanderstapeln der Katalysatorscheiben im Grünlingszustand kommen die Katalysatorscheiben somit nicht mehr flächig aufeinander zu liegen, sondern stehen an den umlaufend oder unterbrochen ausgebildeten Vorsprüngen aufeinander. Mit dieser Ausgestaltung ist es möglich, zwischen den einzelnen Katalysatorscheiben beispielsweise als Kanäle dienende Hohlräume zu gestalten. Da sich der Druck, unter dem die Katalysatorscheiben aufeinander aufliegen nun nicht mehr auf die gesamte Fläche sondern nur auf die ausgebildeten Vorsprünge begrenzt, wird eine verbesserte Qualität der Fügestelle zwischen den Katalysatorscheiben nach dem Sintern erreicht.

In besonders vorteilhafter Ausgestaltung der Erfindung weisen in der Katalysatorscheibe ausgebildete oder durch zwei benachbarte Katalysatorscheiben gebildete Hohlräume, wie Verteiler- und Sammelkanäle, eine Einrichtung zum Stützen der Hohlräume auf. Durch diese Maßnahme wird eine Verformung der Katalysatorscheibe(n) während des Preßsinterns vermieden.

In Ausgestaltung der Erfindung ist die Einrichtung zum Stützen ein Kupfer-Gitternetz, das vorteilhafterweise wenigstens teilweise mit einem Metallblech bedeckt ist.

In anderer, bevorzugter Ausgestaltung der Erfindung besteht die Einrichtung zum Stützen aus auf die Katalysatorscheibe aufgepreßten Stegen. Durch diese Maßnahme wird die Konstruktion vereinfacht und der Fertigungsaufwand minimiert, da keine separaten Teile mehr in bzw. zwischen die Katalysatorscheiben eingefügt werden müssen.

Die Erfindung ist anhand von Ausführungsbeispielen in der Zeichnung schematisch dargestellt und wird im folgenden unter Bezugnahme auf die Zeichnung näher erläutert.
- Fig. 1: zeigt in seitlicher Darstellung einen Schnitt durch eine erfindungsgemäße Katalysatorscheibe.
- Fig. 2: zeigt in seitlicher Darstellung einen Schnitt durch einen aus mehreren aufeinandergestapelten erfindungsgemäßen Katalysatorscheiben gebildeten Stapelreaktor vor dem Preßsintern.
- Fig. 3: zeigt im Ausschnitt und in seitlicher Darstellung einen Schnitt durch ein zweites Ausführungsbeispiel eines aus mehreren aufeinandergestapelten erfindungsgemäßen Katalysatorscheiben gebildeten Stapelreaktors.

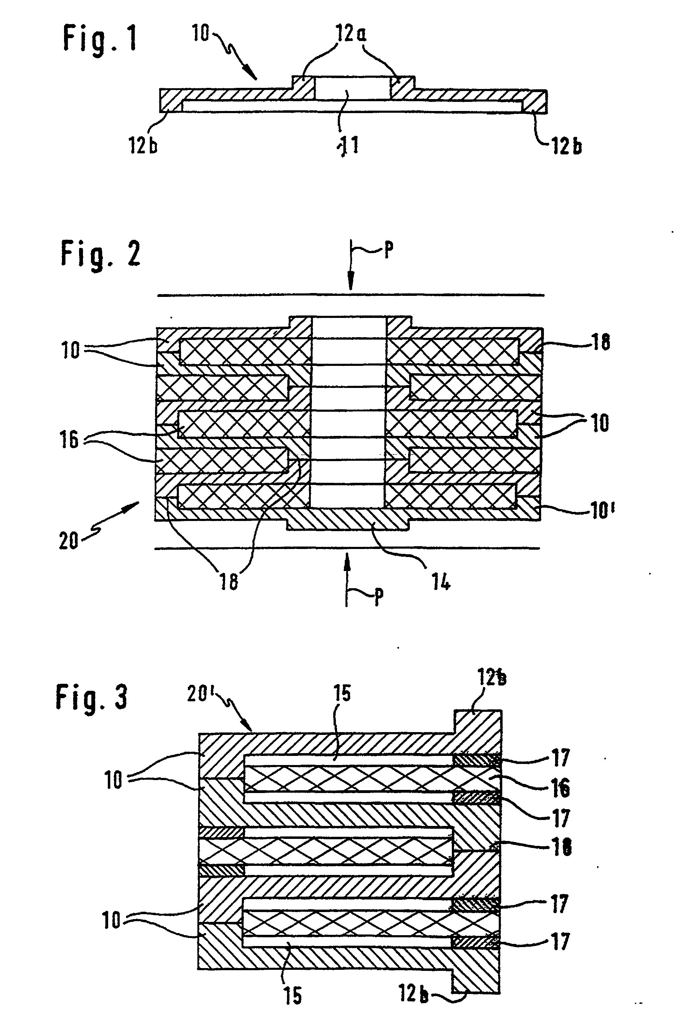

Figur 1 zeigt in seitlicher Darstellung einen Schnitt durch eine erfindungsgemäße Scheibe 10 aus Katalysatormaterial im Grünlingszustand, nachfolgend der Einfachheit als Katalysatorscheibe bezeichnet. Bei der Katalysatorscheibe 10 handelt es sich um eine aus mindestens einem Katalysatorpulver durch Verpressen einen Formkörper bildende dünne und stark komprimierte Schicht, wie sie in der deutschen Patenanmeldung mit dem Aktenzeichen 197 43 673.0 beschrieben ist. Dieser Formkörper verfügt über einen mittig angeordneten Durchbruch 11 sowie über an den Innen- und Außenrändern ausgebildete Vorsprünge 12a, 12b.

Wie im Zusammenhang mit Figur 2 ersichtlich ist, wird durch alternierendes Aufeinanderstapeln mehrerer um jeweils 180° gedrehter Katalysatorscheiben 10 eine Grundstruktur für einen Stapelreaktor 20 aufgebaut, in dem die Vorsprünge 12a bzw. 12b benachbarter Katalysatorscheiben 10 jeweils aufeinander zu liegen kommen. Die als Fügestellen bezeichnete Kontakte zwischen den einzelnen Katalysatorscheiben 10 sind mit dem Bezugszeichen 18 versehen.

Aufgrund der Vorsprünge 12a, 12b liegen die Flächen der Katalysatorscheiben 10 beabstandet zueinander, so daß zwischen den einzelnen Katalysatorscheiben 10 Hohlräume gebildet, die mit Gitternetzen 16 als Stützeinrichtung ausgefüllt sind.

In dem in der Figur 2 dargestellten Ausbildungsbeispiel wird die Struktur des Stapelreaktors 20 nach unten von einer Katalysatorscheibe 10' abgeschlossen, die mittig durchgehend abgeschlossen ist (Bezugszeichen 14).

Zur Ausbildung des Stapelreaktors werden die aufeinandergestapelten Katalysatorscheiben 10 unter Druckbeaufschlagung P gemeinsam gesintert. Durch dieses erfindungsgemäße Sintern unter Druckbeaufschlagung bilden sich Fügestellen 18 zwischen den Katalysatorscheiben 10 aus, die im Verhältnis zu dem porösen Körper der Katalysatorscheiben 10 dicht sind.

Das Zusammensintern kann weiter unterstützt werden, indem die Preßhaut an den Fügestellen 18, die beim Preßvorgang entsteht, durch Aufrauhen entfernt wird.

Durch das Einbringen der Kupfer-Gitternetze 16 in die Hohlräume zwischen den Katalysatorscheiben 10 als Stützeinrichtung werden die beabstandet zueinander liegenden Bereiche der Katalysatorscheiben 10 unterstützt, so daß während des Sinterprozesses keine Verformungen auftreten können.

Die Vorsprünge 12a, 12b können während des Preßvorganges der Katalysatorscheibe höher verdichtet werden, wodurch die Dichtheit der daraus resultierenden Fügestelle weiter verbessert wird.

Figur 3 zeigt in seitlicher Schnittdarstellung einen Ausschnitt aus einem Stapelreaktor 20', der analog zu dem in Figur 2 dargestellten Stapelreaktor aufgebaut ist. Im Unterschied zu dem Stapelreaktor 20 der Figur 2 sind in die Hohlräume 15 zwischen den Katalysatorscheiben 10 als Stützeinrichtungen Gitternetze 16 eingebracht. Die Edelstahlbleche 17 weisen eine Dicke von ca. 0,2 mm auf, die im Bereich der Vorsprünge 12a, 12b teilweise mit Metallblechen 17 aus Edelstahl bedeckt sind. Die Edelstahlbleche 17 entsprechen in ihrem Querschnitt dem Querschnitt der Vorsprünge 12a, 12b bzw. der Fügestellen 18, so daß in jeder Schicht die gleichen Anpreßdrücke herrschen.

Selbstverständlich handelt es sich bei den dargestellten und beschriebenen Katalysatorscheiben und Stapelreaktoren um Ausführungsbeispiele, die den Umfang der beanspruchten Erfindung nicht beschränken. So ist es möglich, die Stützeinrichtungen zum Abstützen der Bereiche der Katalysatorscheiben, die an Hohlräume angrenzen, einteilig mit der Katalysatorscheibe auszubilden. Dazu werden Stege auf die Katalysatorscheiben aufgepreßt, die vorteilhafterweise im wesentlichen senkrecht von der Katalysatorscheibe abstehen und deren Länge der einfachen oder doppelten Höhe der Vorsprünge 12a, 12b entspricht.

Die Erfindung ist auch nicht auf die dargestellte Anordnung der Vorsprünge 12a, 12b beschränkt. Je nach gewünschter Geometrie der Hohlräume in dem Stapelreaktor sind beliebige Anordnungen der Vorsprünge möglich. Auch der dargestellte Aufbau des Stapelreaktors durch alternierendes Stapeln von jeweils um 180° gedrehten Katalysatorscheiben ist natürlich variierbar.

Abschließend sei angemerkt, daß der Begriff "Katalysatorscheibe" in dieser Anmeldung sowohl den gepreßten Formkörper im Grünlingszustand als auch den einem Sinterprozeß unterzogenen Körper umfaßt.

## Patentansprüche

1. Verfahren zur Herstellung eines Stapelreaktors (20) zur Wasserstofferzeugung aus Kohlenwasserstoffen aus einer Mehrzahl von aufeinandergestapelten Katalysatorscheiben (10),
**dadurch gekennzeichnet,**
**daß** ein Sintern der Katalysatorscheiben (10) gemeinsam erst in gestapeltem Zustand erfolgt.

2. Verfahren nach Anspruch 1, **dadurch gekennzeichnet, daß** das Sintern unter vorbestimmter Druckbeaufschlagung (P) erfolgt.

3. Verfahren nach Anspruch 2, **dadurch gekennzeichnet, daß** die Druckbeaufschlagung (P) während des gesamten Sintervorgangs aufrecht erhalten wird.

4. Verfahren nach Anspruch 2 oder 3, **dadurch gekennzeichnet, daß** die Druckbeaufschlagung (P) zwischen 2 und 20 N/mm² beträgt.

5. Verfahren nach einem der Ansprüche 2 bis 4, **dadurch gekennzeichnet, daß** die Druckbeaufschlagung (P) zwischen 5 und 15 N/mm² beträgt.

6. Stapelreaktor zur Wasserstofferzeugung aus Kohlenwasserstoffen, aus mindestens zwei durch Pressen von Katalysatormaterial hergestellten und im gestapelten Zustand gesinterten Katalysatorscheiben (10, 10').

7. Stapelreaktor nach Anspruch 6, dessen Katalysatorscheiben (10, 10') im Bereich des Kontaktes mit einer benachbarten Katalysatorscheibe ausgebildete Vorsprünge (12a, 12b) aufweisen.

8. Stapelreaktor nach Anspruch 7, bei dem in einer Katalysatorscheibe (10) ausgebildete oder durch zwei benachbarte Katalysatorscheiben (10) gebildete Hohlräume (15) eine Einrichtung (16, 17) zum Stützen der Hohlräume aufweisen.

9. Stapelreaktor nach Anspruch 8, bei dem die Einrichtung zum Stützen ein Kupfer-Gitternetz (16) ist.

10. Stapelreaktor nach Anspruch 9, bei dem das Kupfer-Gitternetz (16) wenigstens teilweise mit einem Metallblech (17) bedeckt ist.

11. Stapelreaktor nach Anspruch 8, bei dem die Einrichtung zum Stützen auf die Katalysatorscheibe (10) aufgepreßte Stützstege sind.

## Claims

1. Process for producing a stacked plate reactor (20) for generating hydrogen from hydrocarbons from a plurality of catalyst plates (10) stacked on top of one another, **characterized in that** the catalyst plates (10) are only sintered together once they are in the stacked state.

2. Process according to Claim 1, **characterized in that** the sintering takes place under a predetermined application of pressure (P).

3. Process according to Claim 2, **characterized in that** the application of pressure (P) is maintained throughout the entire sintering operation.

4. Process according to Claim 2 or 3, **characterized in that** the application of pressure (P) is between 2 and 20 N/mm².

5. Process according to one of Claims 2 to 4, **characterized in that** the application of pressure (P) is between 5 and 15 N/mm².

6. Stacked plate reactor for generating hydrogen from hydrocarbons, comprising at least two catalyst plates (10, 10') which are produced by pressing catalyst material and are sintered in the stacked state.

7. Stacked plate reactor according to Claim 6, the catalyst plates (10, 10') of which have projections (12a, 12b) formed in the region of contact with an adjacent catalyst plate.

8. Stacked plate reactor according to Claim 7, in which cavities (15) which are formed in a catalyst plate (10) or by two adjacent catalyst plates (10) have a device (16, 17) for supporting the cavities.

9. Stacked plate reactor according to Claim 8, in which the supporting device is a copper mesh (16).

10. Stacked plate reactor according to Claim 9, in which the copper mesh (16) is at least partially covered with a metal sheet (17).

11. Stacked plate reactor according to Claim 8, in which the supporting device comprises supporting webs pressed onto the catalyst plate (10).

## Revendications

1. Méthode de construction d'un réacteur à empilement de plaques (20) pour la production d'hydrogène à partir d'hydrocarbures, comportant plusieurs rondelles catalytiques (10) empilées les unes au-dessus des autres,
**caractérisée en ce que**
un frittage des rondelles catalytiques (10) s'effectue conjointement uniquement à l'état empilé.

2. Méthode selon la revendication 1, **caractérisée en ce que** le frittage s'effectue sous l'application d'une pression (P) prédéfinie.

3. Méthode selon la revendication 2, **caractérisée en ce que** l'application de la pression (P) est maintenue pendant toute la durée de l'opération de frittage.

4. Méthode selon la revendication 2 ou 3, **caractérisée en ce que** la pression (P) appliquée se situe entre 2 et 20 N/mm².

5. Méthode selon l'une des revendications 2 à 4, **caractérisée en ce que** la pression (P) appliquée se situe entre 5 et 15 N/mm².

6. Réacteur à empilement de plaques pour la production d'hydrogène à partir d'hydrocarbures, comportant au moins deux rondelles catalytiques (10, 10') fabriquées par pressage d'un matériau catalytique et frittées à l'état empilé.

7. Réacteur à empilement de plaques selon la revendication 6 dont les rondelles catalytiques (10, 10') présentent des saillies (12a, 12b) formées dans la zone du contact avec une rondelle catalytique voisine.

8. Réacteur à empilement de plaques selon la revendication 7 dans le cadre duquel des cavités (15) formées dans une rondelle catalytique (10) ou formées par deux rondelles catalytiques (10) voisines présentent un dispositif (16, 17) destiné au support desdites cavités.

9. Réacteur à empilement de plaques selon la revendication 8 dans le cadre duquel le dispositif de support consiste en un treillis (16) en cuivre.

10. Réacteur à empilement de plaques selon la revendication 9 dans le cadre duquel le treillis (16) en cuivre est recouvert pour le moins partiellement d'une tôle (17) métallique.

11. Réacteur à empilement de plaques selon la revendication 8 dans le cadre duquel le dispositif de support consiste en des barettes de support fixées par pressage sur la rondelle catalytique (10).
